(19) Europäisches Patentamt
European Patent Office
Office européen des brevets

(11) Publication number: **0 023 934**
**B1**

(12) **EUROPEAN PATENT SPECIFICATION**

(45) Date of publication of patent specification: **14.11.84**

(51) Int. Cl.³: **C 08 G 18/77,** C 09 D 3/72

(21) Application number: **79102958.0**

(22) Date of filing: **14.08.79**

(54) **Polyurethane resins and polyurethane resin coating compositions.**

(43) Date of publication of application:
**18.02.81 Bulletin 81/07**

(45) Publication of the grant of the patent:
**14.11.84 Bulletin 84/46**

(84) Designated Contracting States:
**DE FR GB IT NL**

(56) References cited:
**FR-A-2 003 985**
**FR-A-2 022 204**

**PATENT ABSTRACTS OF JAPAN, vol. 3, no. 19, February 17, 1979, page 12 C 37**

**The file contains technical information submitted after the application was filed and not included in this specification**

(73) Proprietor: **TORAY INDUSTRIES, INC.**
**2, Nihonbashi Muromachi 2-chome Chuo-ku**
**Tokyo 103 (JP)**

(72) Inventor: **Tadanori, Fukuda**
**1-2 Sakae-machi**
**Otsu-shi, Shiga-ken (JP)**
Inventor: **Sadayuki, Sakamoto**
**378 Ogawa, Shigaraki-cho**
**Koga-gun, Shiga-ken (JP)**
Inventor: **Masami, Saito**
**1-836-15 Kokubu**
**Otsu-shi, Shiga-ken (JP)**

(74) Representative: **Kador . Klunker . Schmitt-Nilson . Hirsch**
**Corneliusstrasse 15**
**D-8000 München 5 (DE)**

**EP 0 023 934 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of the invention

The present invention relates to polyurethane resins which are beneficial as material producing a polyurethane resin coating in particular with excellent weather resistance.

Description of the prior art

Polyurethane resins are classified in two types according to the kind of isocyanate compounds contained in them, i.e. the "yellowing" and "non-yellowing" types. Isocyanates which have hitherto been used for producing polyurethane resins of the non-yellowing type include for example such aliphatic isocyanates as hexamethylenediisocyanate, isophoronediisocyanate, 2,2,4-trimethylhexamethylenediisocyanate, dicyclohexylmethanediisocyanate and xylilenediisocyanate. Whilst non-yellowing type polyurethane resins obtained by causing these isocyanates to react with polyols have been employed as coating materials, many problems still remained to be solved for using them for such a purpose.

One of these problems is their toxicity. Since isocyanate compounds are substances which are chemically highly reactive, they are very dangerous when used by persons who are of an allergic constitution or have weak respiratory organs. Because of this, the limit of concentration in the atmosphere of, for instance, monomers of toluenediisocyanate and diphenylmethanediisocyanate, was fixed at 0.02 ppm by the Commission of the American Conference of Governmental Industrial Hygienists. For such reason, for one thing, the aforesaid isocyanate monomers are seldom used as they are in polyurethane coatings, except in special cases, but are generally used after having been modified into prepolymers, i.e. adducts obtained by adding them to trimethylolpropane, ethylene glycol, etc. This modification has the effect of lowering the vapor pressure, thereby reducing toxicity and unpleasant odor, and, in addition, of allowing the adjustment of reactivity to be made and the diversification of the type of coatings to be realized.

Since, however, it is extremely difficult from an industrial point of view to wholly eliminate isocyanate monomers in the prepolymer additions, the fact still remains that one smells a strong irritating odor while engaged in the work of preparing coating materials or of applying coatings, many people complaining of the symptoms of respiratory diseases contracted by inhaling isocyanate vapor. With an increase in the use of polyurethane products, this problem is of major importance.

With the isocyanate additions, in particular, it is said that a dissociation to diisocyanates, which are highly toxic monomers, occurs while they are being stored, depending upon the storage conditions. For this reason, measures are being taken to improve the working environment, such as for instance ensuring good ventilation, so that the operators will not directly inhale vapor of isocyanate compounds. However, the state of affairs in this connection is still far from being satisfactory.

The second problem in conventional technology is that much remains to be desired in respect of the weather resistance of conventional coatings. Although the non-yellowing type polyurethane resins were originally developed with a view to improving the weather resistance of coatings, they are not, as yet, sufficiently resistant to weather under severe outdoor conditions over a long period of time, such as is necessary for automobiles, railroad carriages, aircrafts, ships and building materials.

The third problem concerning polyurethane coating materials is that the range in which the selection of solvent composition can be made is not wide enough, and in many cases, if the amount of solvent is reduced to save energy and prevent environmental pollution, the resultant product being a so-called "high solid type" coating with a high concentration of polyurethane resin, the coating efficiency is much impaired because of its high viscosity.

Summary of the invention

The object of the present invention is to provide polyurethane resins and polyurethane resin coatings having high weather resistance and providing an improved coating efficiency.

This object is solved by a polyurethane resin characterized in that it is a reaction product obtained by reacting.

(A) a saturated polyol with
(B) a trifunctional isocyanate of the following general formula:

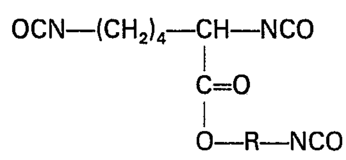

wherein R is a divalent hydrocarbon group with 2 or 3 carbon atoms at an NCO/OH mole ratio of 0.5 to 2.0, and in which the concentration of the carbamide group is $5\times10^{-4}$ to $50\times10^{-4}$ moles per gram of said reaction product, and the bridging parameter 150 to 1,500.

The polyurethane resins and coating compositions of the present invention exhibit excellent weather-resistance and improved coating characteristics.

Description of the preferred embodiments

A polyol as referred to in the present invention means a compound or polymer containing two or more hydroxyl groups per molecule.

Examples of polyols are: diols, triols, tetraols, pentols and hexitols as well as polymer polyols such as polyesters containing two or more hydroxyl radicals per molecule (hereinafter called "polyester polyol"), polyethers containing two or more hydroxyl groups per molecule (hereinafter called "polyether polyol"), and acrylic polymers containing two or more hydroxyl radicals per molecule (hereinafter called "polyacryl polyol"). These polyols may be used singly or as a mixture of two or more kinds. Further examples of preferred polyols are indicated hereinafter.

Diols:

ethylene glycol, propylene glycol, β;β'-dihydroxydiethyl ether (diethylene glycol), dipropylene glycol, 1,4-butylene glycol, 1,3-butylene glycol, polyethylene glycol, polypropylene glycol, polypropylene-polyethylene glycol, polybutylene glycol;

Triols:

glycerol, trimethylolpropane, 1,2,6-hexanetriol;

Tetrols:

pentaerythritol, 2-methylglucoside;

Hexitol:

sorbitol;

Polyester polyols:

These are prepared by a condensation reaction between a polybasic acid, such as adipic acid, dimer acid, phthalic anhydride and isophthalic acid, and a diol or triol, such as ethylene glycol, diethylene glycol, propylene glycol, trimethylol propane and glycerol.

Polyether polyols:

These are prepared by adding propylene oxide, ethylene oxide, or the like, to a polyhydric alcohol, such as glycerol or propylene glycol. This category also includes polyether polyols rich in hydroxyl radicals obtained by causing a multifunctional compound such as ethylenediamine or ethanolamine, to react with ethylene oxide or propylene oxide.

Polyacryl polyols:

Copolymers of an acrylic acid ester or methacrylic acid ester containing a hydroxyl group expressed by the following general formula:

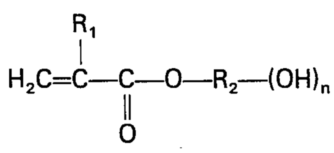

wherein

n=1, 2 or 3

$R_1$=hydrogen or methyl

$R_2$=a substituted or non-substituted hydrocarbon group with 2 to 12 carbon atoms and a monomer capable of being copolymerized therewith.

Examples of acrylic acid esters or methacrylic acid esters containing hydroxyl groups are:

2-hydroxyethyl acrylate, 2-hydroxypropyl acrylate, 2-hydroxybutyl acrylate, 2-hydroxyethyl methacrylate, 2-hydroxypropyl methacrylate, 3-hydroxypropyl methacrylate, 4-hydroxybutyl methacrylate, 2-hydroxypentyl methacrylate, methacrylic acid monoester of glycerine, acrylic acid or methacrylic acid monoester of trimethylol propane, 2-hydroxy-3-chloropropyl acrylate and 2-hydroxy-3-chloropropyl methacrylate.

Among these the most preferred are: 2-hydroxyethyl methacrylate, 2-hydroxyethyl acrylate and 2-hydroxypropyl methacrylate.

Examples of monomers which are capable of being copolymerized with the above-mentioned acrylic acid or methacrylic esters containing a hydroxyl group are given hereinafter.

(1) acrylic acid or its esters, for example, acrylates of methyl, ethyl, propyl, butyl or 2-ethylhexyl
(2) methacrylic acid or its esters, for example, methacrylates of methyl, ethyl, butyl, decyl, 2-ethylhexyl or lauryl
(3) styrene or its derivatives, for example $\alpha$-methylstyrene or $\beta$-chlorostyrene,
(4) vinyl esters, for example, vinyl acetate, vinyl propionate or vinyl isopropionate,
(5) nitriles, for example, acrylonitrile or methacrylonitrile.

Among these the most preferred are: methyl acrylate, ethyl acrylate, butyl acrylate, methyl methacrylate, butyl methacrylate, lauryl methacrylate, acrylic acid, methacrylic acid, styrene, acrylamide and vinyl acetate.

To prepare polyacryl polyols best suited for the purpose in question, it is desirable that the amount of each monomer used be selected from the following ranges.

| | |
|---|---|
| (A) Hydroxyalkyl(meth)acrylate | 5 to 30% by wt. |
| (B) Alkyl ester of acrylic acid and/or of methacrylic acid | 50 to 95% by wt. |
| (C) Other monomer(s), as the occasion demands | 0 to 50% by wt. |
| (D) Acrylic acid or methacrylic acid | 0 to 10% by wt. |

If, of the foregoing, the amount of hydroxyalkyl (meth)acrylate is less than 5% by wt., the degree of bridging by reaction with isocyanate compounds becomes too small and hence it will be impossible to obtain an excellent film coating.

While the preparation of polyacryl polyols by copolymerization of monomers as described above may be carried out by any of the known polymerization methods such as solution, block, emulsion and suspension polymerization, it is preferred to polymerize in solution.

A variety of polyols may be used, but, in general polyester polyols or polyacryl polyols are preferred.

As for the molecular weight of polyols used a selection may be made from quite a wide range according to the purpose for which they are intended. For the "high solid type" coating, however, a range of 500 to 5,000, especially 500 to 3,000, is preferred. More particularly, when polyester polyols are used, those with a molecular weight in the range of 500 to 1,000 are best suited; whereas when polyacryl polyols are used, those with a molecular weight in the range of 1,000 to 3,000 are preferred. When preparing coatings which are not of the "high solid type" polyols with a molecular weight higher than ordinary are employed.

The trifunctional isocyanate compounds employed in the present invention are those expressed by the general formula previously indicated, typical examples of which include:

2,6-diisocyanate caproic acid -$\beta$-isocyanate ethyl ester; 2,6-diisocyanate caproic acid -$\gamma$-isocyanate propyl ester; 2,6-diisocyanate caproic acid -2-methyl-$\beta$-isocyanate ethyl ester.

All of these can be prepared by reacting an ester of lysine and aminoalcohols with phosgene.

It is difficult to achieve polymerization if the carbon number of R in the aforesaid general formula is 1; whereas if the carbon number is 4 or higher, the content of isocyanate in the trifunctional isocyanates becomes too small, and this will be detrimental to the physical properties of polyurethane resin films obtained by reaction with polyols and will furthermore increase the viscosity of the trifunctional isocyanate compounds, thus making the product less suitable.

By adjusting the NCO/OH mole ratio, the physical properties and hence the efficiency of the product, including its film strength, flexibility, chemical resistance, solvent resistance, etc., can be modified within a wide range, thereby making it suitable for specific purposes.

Compounds of which the NCO/OH mole ratio is in the range of 0.5 to 2.0 are suitable for the manufacture of films and for the application of film coatings. For polyurethane coatings in particular, the range of 0.5 to 1.2 is preferred.

If the NCO/OH mole ratio is below 0.5 the hot water and acid resistance of the film coatings produced is lowered, and this results in poorer weather resistance. When the ratio is above 2.0 the resistance to weather is also affected.

Those with an NCO/OH mole ratio in the range of 0.5 to 1.0 may be used advantageously for such fields as electrical insulation, encapsulation, and the manufacture of cast products.

When the NCO/OH mole ratio is in the range of 0.1 to 0.7, the compounds may be advantageously utilized for the manufacture of highly efficient adhesives or hardening agents. When, on the other hand, the NCO/OH mole percentage is greater, the compounds are suitable for the manufacture of foam products. The foaming may be achieved by introducing a certain amount of water or a blowing agent into the reaction products, by utilization of the known techniques of foaming.

It is essential that the concentration of the carbamide contained in the reaction product between

the polyol and the trifunctional isocyanate be in the range of $5\times10^{-4}$ to $50\times10^{-4}$ moles per gram of said reaction product. The term "carbamide radical" as herein used indicates a group expressed by:

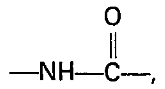

which exists in the urea bond, urethane bond, biuret bond and allophanate bond. In an IR analysis, the existence of this carbamide radical can be confirmed from a peak in the vicinity of 1530 $cm^{-1}$. If the concentration of the carbamide radical is lower than stated, it is impossible to obtain a film coating which excels in durability, pliability, solvent and chemical resistance and adhesive power. If, on the other hand, the concentration is higher than stated, the film coating will have poorer resistance to weather.

It is further essential that the bridging parameter E (calculated value) of the aforesaid reaction products be in the range of 150 to 1,500. If it is below this lower limit, the pliability of a film coat obtained will be very poor. If, on the other hand, it is above the upper limit, a film coating of high durability cannot be obtained. Here, the bridging parameter $E_c$ indicates a parameter defined by T. C. Patton (Off. Digest, 344—346, 348 '62), as:

$$E_c=\frac{W_1+W_2}{\dfrac{W_1C_1}{F_1E_1}+\dfrac{W_2C_2}{F_2E_2}}$$

wherein

$W_1$=weight of polyol;
$W_2$=weight of isocyanate;
$F_1$=degree of functionality of polyol;
$F_2$=degree of functionality of isocyanate;
$C_1$=degree of bridging function of polyol, $C_1=F_1-2$;
$C_2$=degree of bridging function of isocyanate, $C_2=F_2-2$;
$E_1$=equivalent weight of polyol; and
$E_2$=equivalent weight of isocyanate.

The polyurethane resins of the present invention can be used for one-component as well as for two-component type compositions. They are used as two-component type coatings most advantageously.

(1) Two-component, polyol hardening type

This is a two-component type polyurethane resin coating consisting of a kneaded mixture of a polyol and a pigment, the latter being added optionally ("A" liquid) and a trifunctional isocyanate, diluted with a solvent as required ("B" liquid). In use, "A" and "B" liquids are mixed together and, when necessary, the viscosity is adjusted by the use of a thinner. For mixing the two liquids, a two-liquid gun may preferably be employed. It is desirable that the mixing ratio be determined in such a manner that the NCO/OH mole ratio will be 0.5 to 2.0, the concentration of the carbamide radical $5\times10^{-4}$ to $50\times10^{-4}$ moles per gram of the reaction product, and the bridging parameter 150 to 1,500.

The solvent of the "B" liquid and the thinner of the mixture, which are used as required, may be either the same or different; but, in the latter case, it is necessary that the two are compatible with each other. Further, these must not be reactive with isocyanates and polyols, such as those containing active hydrogen atoms. Some examples of solvents that may used are given below.

Hydrocarbon solvents:
benzene, toluene, xylene, and aromatic naphtha.

Ester solvents:
ethyl acetate, butyl acetate, 2-ethoxyethanol hexyl acetate, amyl acetate, ethyl propionate, and butyl propionate.

Ketone solvents:
acetone, methyl ethyl ketone, methyl isopropyl ketone, methyl isobutyl ketone, diethyl ketone, and cyclohexanone.

Glycol ester solvents:
ethylene glycol monoethyl ether acetate, and diethylene glycol monoethyl ether acetate.

According to the present invention more than 50% by wt. of the whole solvent composition can be hydrocarbon solvents.

Further, the amount of solvent in the "B" liquid can be as small as 0 to 50% by wt., and this also constitutes a characteristic feature of the coatings of the present invention. This makes it easier to obtain a "high solid type" coating which is a factor contributing to the improvement of the outward appearance of the film coatings.

As for polyols to be used, those which were previously mentioned, i.e. polyester polyols, polyether polyols, polyacryl polyols, etc., are preferred.

By combining different kinds of polyols and isocyanate compounds, it is possible to obtain coatings of varied properties, from soft to hard and tough ones, all of which exhibit excellent resistance to weather, water, chemicals and stain. Coatings of this type are ordinarily used at temperatures ranging from room temperature to 120°C. They display an excellent adhesive property when used for coating such materials as ferrous and nonferrous metals, plastics, rubber, leather, concrete, etc., and hence have a wide range of applications in such fields of industries as the manufacture of building materials, automobiles, machines and instruments, and woodworks; building of aircrafts, railroad carriages and ships, and so forth.

(2) One-component, heat curing type

With coatings of the two-component polyol hardening type which have been described in the foregoing, the reaction progresses even at room temperature. Hence cases frequently arise where the pot life of coatings in use presents a problem.

In this type of coating, a one-liquid, heat curing type, the isocyanate group of the isocyanate compound is blocked by the addition of a blocking agent so that the coating will be stable at room temperature. After having been applied, the coating is heated to dissociate the blocking agent. The isocyanate group is thus activated again and is caused to react with the hydroxyl group to form a film coating. This method is best suited for such applications as coatings for automobiles on a manufacturing line where it is necessary to ensure stability of coating materials while they are in store at room temperature.

Polyester polyols and polyacryl polyols are preferred, as polyols to be combined with the blocked type isocyanate prepolymer.

as blocking agents for the purpose of masking free isocyanate radicals of the trifunctional isocyanate compounds used in the present invention, those which are generally known may be used. Some examples of such blocking agents are:

phenol, m-nitrophenol, p-chlorophenol, catechol, ethyl malonate, acetylacetone, ethyl acetoacetate, cresol, ε-caprolactam, methyl ethyl ketoxime, cyclohexanoneoxime, butyl mercaptan, methanol, ethanol, ethylene chlorohydrin.

Although the temperature at which the above-mentioned blocking agents are dissociated varies with the kind of agent, it is generally accepted that heating to at least 120°C is required. Since the coating of this type thus requires baking at a relatively high temperature, it has hitherto been in use mainly in such fields as the manufacture of electric wires, etc. It is expected, however, that there will be new developments in its utilization, such as adaptation to a powder paint with polyurethane resin base and to an aqueous emulsion paint.

Solvents for this type of coating, which are used as the occasion demands, are identical with those in the case of the two-component type coatings. Similarly, in this case more than 50% by wt. of the whole composition of solvents can be hydrocarbon solvents.

The coating compounds according to the present invention can be applied to articles to be coated in an ordinary method of coating, such as spray, brush or roller coating, or dipping. It also permits the use of commonly used pigments and plasticizers, or other kinds of additives which are used in small amounts when preparing a paint or when applying it in usual amounts. When choosing pigments as in the case of selecting solvents, it is necessary to pay attention to their water content, as well as to their properties. It is to be noted that extenders, in particular, have a high degree of water adsorbability.

Catalysts may also be used to accelerate drying and hardening. For instance, such tertiary amines as dimethylethanolamine and triethylenediamine, and such organic salts of tin as dibutyl tin dilaurate, may be employed.

The characteristics of the coatings according to this invention are as follows:

(1) They have excellent gloss retention and anti-cracking properties.
(2) They show an excellent resistance to acid and water. It is assumed that these properties originate from the fact that the coatings harden very quickly after application and are due to the network-like structure of the coating produced by hardening with the trifunctional isocyanate compound used in the present invention.
(3) The outward appearance of the coating is improved.

Whilst the luster and build of a coating are related to various factors, the influence of the coating on the undercoating is a factor which must not be disregarded. With the compounds of this invention, it is possible to use a variety of solvents and, in particular, aromatic solvents. This permits the lessening of

the influence of the coating on the undercoating, e.g. a primer surfacer; that means that the permeation of the solvent is kept at a minimum, thus helping to achieve an improvement in the outward appearance of the coating. Thus, it is best suited for such purposes as the coating of automobiles, etc., where the emphasis lies on good outward appearance.

(4) Coatings of the "high solid type" can be formulated.

Among the recent restrictions as regards environmental pollution, the development of polyurethane resin coatings of the "high solid type" or of the solventless type is attracting a good deal of attention. Isocyanate as an ingredient of such coatings is required, as in the case of the polyol ingredient, to have low viscosity at room temperature. As the trifunctional isocyanate used in the present invention has a low molecular weight, it also has a low viscosity, and hence it may be used for the manufacture of coatings that will help to prevent environmental pollution. It is also possible by the proper choice of polyols to manufacture solventless coatings and thus to contribute to the saving of resources of energy.

The coating of the present invention is, because of its low viscosity, also excellent in respect of coating work efficiency.

(5) The hardening speed is high.

Although the hardening speed at room temperature hardly differs from that of coating materials on the market, it becomes considerably higher than the latter with the rise of the baking temperature. Thus, it is possible to shorten the time required for curing.

(6) The degree of toxicity is low.

Hexamethylenediisocyanate prepolymers or adducts have, in general, a rather strong irritating odor. This is attributed to the existence of a very small amount of hexamethylenediisocyanate monomers in the prepolymers or adducts. On the other hand, the trifunctional isocyanate compounds employed in the present invention have a remarkably low vapor pressure and there is no liberation of highly poisonous volatile ingredients while they are kept in store. Furthermore, their NCO content is higher than that of coating materials on the market. Therefore, the coatings of this invention emit little irritating odor. Besides, since the proportion of the isocyanate ingredient to that of the polyol ingredient may, in view of its high NCO content, be reduced, this is quite advantageous from the viewpoint of hygene.

Apart from its use as a coating material as described above, the polyurethane resin of the present invention may be used in various industrial fields.

For instance, those with an NCO/OH mole ratio in the range of 0.5 to 1.0 may be advantageously used for such fields as electrical insulation, encapsulation, and the manufacture of cast products.

When the NCO/OH mole ratio is in the range of 0.1 to 0.7 the compounds may be advantageously utilized for the manufacture of highly efficient adhesive or hardening agents. When, on the other hand, the NCO/OH mole ratio is greater, the compounds are suitable for the manufacture of foam products. Foaming may be achieved by introducing a certain amount of water or a blowing agent into the reaction product, utilizing the known foaming techniques.

The invention will now be further illustrated by way of examples. "Part or parts" of the compositions shown in the examples, denote "part or parts by weight".

Synthesis of 2,6-diisocyanate caproic acid -β-isocyanate ethyl ester

122.2 g (2.0 moles) of ethanolamine, 100 ml of o-dichlorobenzene and 420 ml of toluene were put in a four-mouthed flask fitted with a stirrer, a thermometer, a gas-introducing tube and a reflux condenser combined with a Dean-Stark apparatus. By introducing hydrogen chloride gas under ice cooling ethanolamine was converted into hydrochloride. Subsequently, 182.5 g (1.0 mole) of lysine—monohydrochloride were added; by heating the mixture to a reaction temperature of 80°C, hydrochloride of ethanolamine was caused to melt; and then by introducing into it hydrogen chloride gas, it was converted into lysine—dihydrochloride. The passing of hydrogen chloride gas through the compound at a rate of 20 to 30 ml per min., with the reaction mixture heated to the reflux temperature (116°C) was continued and this temperature was maintained until there no longer was any distillation of water. The reaction was allowed to continue for approximately 8 hours; thereafter, the solvent was decanted, and a mixture of methanol and ethanol was added to the resultant oil-like substance and heat was applied. When this product was left standing at room temperature, a deposition of crystals occurred. By filtering out these crystals, 165 g of tertiary hydrochloride of lysine-β-aminoethyl ester having a melting point of 175°C, recrystallized from a mixture of methanol and ethanol, was obtained.

This trihydrochloride was pulverized and was then vacuum-desiccated at 50°C for 8 hours. Subsequently, it was put in a four-mouthed flask provided with a stirrer, a thermometer, a gas-introducing tube and a reflux condenser, and a suspension was obtained by pouring 2.1 lit. of o-dichlorobenzene into it. While stirring this suspension, phosgen was passed through it at a rate of 2.8 moles/hr., and the suspension was heated at 120°C for 10 hours. When the temperature was gradually raised to 150°C over a period of 6 hours, the suspensoid was practically wholly dissolved in the liquid. After cooling, the liquid was filtered and the solvent was eliminated by distillation under reduced pressure. The residue was distilled under nitrogen gas flow using an oil diffusion pump. The product, 140 g (yield 90%) of lysine isocyanate-$\beta$-isocyanate ethyl ester (2,6-diisocyanate caproic acid -$\beta$-isocyanate ethyl ester) (hereinafter referred to as "LTI-E" was a colorless, transparent liquid with a boiling point of 155 to 157°C/0.022 mmHg. Viscosity: 29 cps/20°C. NCO content: 47.1% by wt. (calculated value 47.2% by wt.). Infrared spectrum: 2225 (isocyanate group), 1745 $cm^{-1}$ (ester carbonyl), 1460, 1355, 1200 $cm^{-1}$ (ester ether). Nuclear magnetic resonance spectrum: 1.2 to 2.3 ppm (6H), 3.2 to 3.95 ppm (4H, —$CH_2$—NCO), 4.0 to 4.7 ppm

(3H, 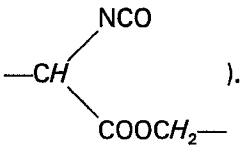 ).

Mass spectrum: m/c 153 ($OCNCH_2CH_2CH_2CH_2$—CHHCO), 267 (molecular weight).

Synthesis of 2,6-diisocyanate caproic acid -$\gamma$-isocyanate propyl ester

30 g (0.4 mole) of 3-aminopropanol and 100 ml of toluene were introduced into a four-mouthed flask fitted with a stirrer, a thermometer, a gas-introducing tube and a reflux condenser combined with a Dean-Stark apparatus: By introducing hydrogen chloride gas, 3-aminopropanol was converted into the hydrochloride. Then, 36.6 g (0.2 mole) of lysine-monohydrochloride were added, and by again introducing hydrogen chloride gas into the mixture it was converted into dihydrochloride of lysine. The reacting mixture was heated to the reflux temperature (110°C) and, meanwhile, hydrogen chloride gas was passed through it. After 11 hours the azeotropic distillation of water ceased. Toluene was eliminated from the resultant product, and ethanol was added to the residual oil-like substance and heat was applied to the mixture. When this product was allowed to stand at room temperature, a deposition of crystals occurred. By filtering these crystals, 47 g of trihydrochloride monohydrate of lysine-$\gamma$-aminopropyl ester having a melting point of 138 to 145°C, recrystallized from a mixture and ethanol, was obtained.

Then 25 g of desiccated powder of trihydrochloride monohydrate of lysine-$\gamma$-aminopropyl ester, polymerized as above, and 300 ml of o-dichlorobenzene were put in a four-mouthed flask provided with a stirrer, a thermometer, a gas-introducing tube and a reflux condenser so as to form a suspension. While maintaining the temperature of the suspension at 105°C, phosgen was passed through it at a rate of 0.4 mole/hr. for 10 hours. Then the temperature was gradually raised to 150°C, and the reaction was allowed to progress at this temperature for 4 hours. After cooling, the liquid was filtered and the solvent was eliminated by distillation under reduced pressure. The residue was made to undergo a molecular distillation. The product was 7.2 g (yield 34%) of lysine diisocyanate -$\gamma$-isocyanate propyl ester (2,6-diisocyanate caproic acid -$\gamma$-isocyanate propyl ester) (hereinafter referred to as "LTI-P" a light yellow liquid with a boiling point of 153 to 155°C/0.036 mmg. Viscosity: 28 cps/20°C. NCO content: 44.6% by wt. (calculated value 44.8% by wt.) Infrared spectrum: 2225 $cm^{-1}$ (isocyanate group), 1740 $cm^{-1}$ (ester carbonyl), 1458, 1350, 1200 $cm^{-1}$ (ester ether). Nuclear magnetic resonance spectrum: 1.2 to 2.4 ppm (8H), 3.2 to 3.8 ppm (4H, —$CH_2$—NCO), 3.9 to 4.6 ppm

(3H, 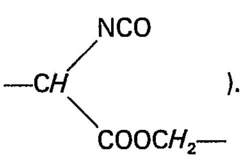 ).

Mass spectrum: m/c 153 ($OCNCH_2CH_2CH_2CH_2$CHNCO), 281 (molecular weight).

Example 1

In a reactor provided with a stirrer, a thermometer, a condenser and a nitrogen gas introducing tube after purging with nitrogen gas, 50 parts xylole and 50 parts butyl acetate were introduced, and the temperature was raised to a value between 90 and 95°C.

A mixture composed of:

| | |
|---|---|
| styrene | 34.0 pts. |
| n-butyl acrylate | 38.0 pts. |
| 2-hydroxyethyl methacrylate | 23.4 pts. |
| acrylic acid | 0.4 pt. |
| and azobisisobutylonitrile | 1.2 pts. |

was continuously dropped into the reactor over a period of 3 hours, to effect the polymerizing reaction. After having finished dropping the mixture of monomers, the compound was stirred for 1 hour while it was heated. Thereafter, 0.7 part of azobisisobutylonitrile were added 4 times an interval of 30 minutes, and the compound was stirred for another hour to complete the reaction.

The resin solution thus obtained (a solution of polyacryl polyol) was colorless and transparent. Its Gardener bubble viscosity was "T" to "U" at 25°C, and the content of nonvolatile matter 50%. The molecular weight (Mn) was 14500; value of hydroxyl group 50; and calculated value of mean number of hydroxyl groups in a molecule 25.8.

This resin solution and LTI-E, which had been previously prepared, were uniformly blended in such a manner that the amounts of hydroxyl and isocyanate groups were equal. A mixed thinner composed of toluene and 2-ethoxyethyl acetate, in the ratio of 65/35% by wt., was added to this blended solution to adjust the fluidity to 20 sec. at +4 of the Ford cup. This diluted coating material was applied by spraying it on a mild steel sheet, previously coated with primer surfacer (No. 114 mfrd. by Kansai Paint Co.) and polished, in such a manner that the film thickness after drying was approximately 40 $\mu$, and the coating was allowed to harden at room temperature (23°C) for a week. The film coating obtained was, as is shown in Table 1, hard and had an excellent resistance to acid and hot water. In respect of anti-yellowing property, too, it was equal to a coating obtained by the use of non-yellowing type isocyanate prepolymers on the market.

The concentration of the carbamide group was $15.7 \times 10^{-4}$ moles/g; the bridging parameter was 501; and the percentage of hydrocarbon solvent in the solvents contained in the coating material was 59.

Example 2

A coating was formed in the same manner as Example 1, except for the fact that the mixing ratio of polyacryl polyol solution and LTI-E was modified so as to obtain an NCO/OH mole ratio of 0.5. The properties and efficiency of the coating obtained are shown in Table 1.

The concentration of the carbamide groups was $8.4 \times 10^{-4}$ moles/g.; the bridging parameter was 947; and the percentage of hydrocarbon solvent in the solvents contained in the coating material was 59.

Example 3

A coating was formed in the same manner as Example 1, with the exception that the mixing ratio of polyacryl polyol solution and LTI-E was modified so as to obtain an NCO/OH mole ratio of 1.5. The properties and efficiency of the coating obtained are shown in Table 1.

The concentration of the carbamide group was $22.0 \times 10^{-4}$ mole/g.; the bridging parameter was 558; and the percentage of hydrocarbon solvent in the solvents contained in the coating material was 58.

Example 4

In the reaction apparatus as was used in Example 1, after purging it with nitrogen gas, 80 parts xylole and 20 parts butyl acetate were introduced and the temperature was raised to between 80 and 85°C.

A monomer mixture composed of:

| | |
|---|---|
| styrene | 25.0 pts. |
| methyl methacrylate | 25.0 pts. |
| n-butyl methacrylate | 21.0 pts. |
| n-butyl acrylate | 14.0 pts. |
| 2-hydroxyethyl methacrylate | 12.0 pts. |
| acrylic acid | 0.7 pts. |
| and azobisisobutylonitrile | 1.2 pts. |

was continuously dropped into the reactor over a period of 3 hours. With the dropping ceased, the reaction mixture was heated and stirred for 2 hours. Subsequently, 0.5 parts of azobisisobutylonitrile were added 4 times at an interval of 2 hours, and the mixture was further heated and stirred for 3 hours to complete the polymerization reaction.

The resin solution thus obtained was colorless and transparent. Its Gardener bubble viscosity (25°C) was "V" to "W", and the content of non-volatile matter was 50%. The molecular weight (Mn) was 11700; the value of the hydroxyl groups was 25; and the calculated value of the average number of hydroxyl groups in a molecule 10.4.

A coating material was prepared with this resin solution applied and was allowed to harden in the same manner as in example 1. As shown in Table 1, a coating having a good luster, with satisfactory rise of hardness and excellent resistance to acid and hot water was obtained. Also in respect of the anti-yellowing property the coating was as good as one obtained by the use of non-yellowing type isocyanate prepolymers available on the market, i.e. no yellowing was observed.

The concentration of carbamide groups was $8.4 \times 10^{-4}$ moles/g.; the bridging parameter was 1,067; and the percentage of hydrocarbon solvent in the solvents contained in the coating material was 71.

Example 5

LTI-P, which had been previously prepared by polymerization, was added to the resin solution obtained in Example 4 in such a manner that the amounts of hydroxyl and isocyanate groups were equal, and these were uniformly mixed together.

A coating material was prepared with this mixture, applied and allowed to harden in the same manner as in Example 1.

The properties and efficiency of the coating obtained are shown in Table 1.

The concentration of the carbamide groups was $8.5 \times 10^{-4}$ moles/g.; and the bridging parameter was 1031.

Comparative Example 1

A coating was formed in the same manner as Example 1, except for the fact that the mixing ratio of polyacryl polyol solution and LTI-E was modified so as to obtain an NCO/OH mole ratio of 2.50. The characteristics of the coating obtained are shown in Table 1.

The concentration of carbamide groups was $32.4 \times 10^{-4}$ moles/g.; and the bridging parameter was 633.

Comparative Example 2

A coating was formed in the same manner as Example 4, except for the fact that the mixing ratio of the resin solution and LTI-E was modified so as to obtain an NCO/OH mole ratio of 0.5. The properties of the coating obtained are shown in Table 1.

The concentration of carbamide groups was $4.4 \times 10^{-4}$ moles/g.; and the bridging parameter was 1,999.

Comparative Example 3

A coating was formed in the same manner as in Example 5, except for the fact that the mixing ratio of the resin solution and LTI-P was modified so as to obtain an NCO/OH mole ratio of 0.5. The properties of the coating obtained are shown in Table 1.

The concentration of the carbamide groups was $4.4 \times 10^{-4}$ moles/g.; and the bridging parameter 1,966.

TABLE 1

| Examples and Comparative Examples | | Ex. 1 | Ex.2 | Ex. 3 | Ex. 4 | Ex. 5 | Comp. Ex. 1 | Comp. Ex. 2 | Comp. Ex. 3 |
|---|---|---|---|---|---|---|---|---|---|
| Isocyanate compounds | | LTI-E | LTI-E | LTI-E | LTI-E | LTI-P | LTI-E | LTI-E | LTI-P |
| Items for assessment | | | | | | | | | |
| Weather resistance | Weatherometer 2500 hrs. | I | II-1 | II | II | II | IV | IV | IV |
| | Exposure outdoors 2 years | I | II-I | II | II | II | III-IV | V | V |
| Rise of hardness | | I-II | 0 | 0 | I | 0 | 0 | 0 | 0 |
| Gloss value, 60° | | 90 | 0 | 0 | 95 | 0 | 0 | 0 | 0 |
| Lead pencil hardness | | 3H | 0 | 0 | 2H | 0 | 0 | 0 | 0 |
| Shock resistance, 1 kg | | 35 cm | 0 | 0 | 20 cm | 0 | 0 | 0 | 0 |
| Erichsen test | | 6.0 | 0 | 0 | 7.5 | 0 | 0 | 0 | 0 |
| Cross-cut adhesion property | | 100/100 | 0 | 0 | 100/100 | 0 | 0 | 0 | 0 |
| Hot water resistance, 50°C×24 hrs. | | II | 0 | 0 | II | 0 | 0 | 0 | 0 |
| Acid resistance 40 vol.% $H_2SO_4$ 55°C×5 hrs. | | II-III | 0 | 0 | II | 0 | 0 | 0 | 0 |

Table 1 (Cont'd)

| Examples and Comp. Examples | | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| Solvent resistance | Naphta No. 5/toluole (6) (4) dipped for 10 min. | II | 0 | 0 | II | 0 | 0 | 0 | 0 |
| | "Xyloler" rubbing, 30 times | II | 0 | 0 | II-III | 0 | 0 | 0 | 0 |
| Yellowness | 0 hr | 1.3 | 0 | 0 | 3.1 | 0 | 0 | 0 | 0 |
| Yellowing deg. | 200 hrs | 9.1 | 0 | 0 | 12.2 | 0 | 0 | 0 | 0 |
| Color difference UV* | 200 hrs | 7.8 | 0 | 0 | 9.0 | 0 | 0 | 0 | 0 |
| | 200 hrs | 4.7 | 0 | 0 | 5.5 | 0 | 0 | 0 | 0 |
| ΔE (Lob) | | | | | | | | | |

*"Thosiba" Sterilizing Lamp GL-15 (15 W), wavelength 254 nm; strength of radiation at a distance of 20 cm=600 $\mu w/cm^2$.
Pigment Mixed: PWC 50%.
Hardening: A week, at room temperature (23°C).

Legend:—
I=Very good; II=Good;
III=Somewhat poor; IV=Poor;
V=Very Poor; 0=Not measured.

Example 6

A polyester polyol was prepared in the following manner. A mixture composed of:

| | |
|---|---|
| neopentyl glycol | 150.0 pts. |
| trimethylol propane | 22.1 pts. |
| adipic acid | 72.3 pts. |
| and isophthalic acid | 123.2 pts. |

was introduced into a reactor and stirred for 30 minutes while heating it at 200°C. Then, heating and stirring were continued at a temperature of 220°C until it reached an acid value of 10 and a CH value of 150, thus distilling water (approx. 15 hrs.). The molecular weight of the reaction product obtained was approximately 1000. By adding butyl acetate to this reaction product while it was being cooled, a solution with 70% solid matter content, i.e. a polyester polyol solution was prepared.

Then LTI-E was added to this polyester polyol solution in such a manner that the amounts of hydroxyl and isocyanate groups were equal, and these were uniformly mixed. The calculated value of the concentration of the carbamide groups of this reaction product was $21.8 \times 10^{-4}$ and the calculated value of the bridging parameter was $E_c$ 790.

A film coating which was obtained by applying this coating mixture and letting it harden had an excellent luster and very good mechanical properties.

The percentage of hydrocarbon solvent in the solvents contained in said coating material was 48.

Example 7

A two-component type polyurethane coating consisting of "A" and "B" liquids, as mentioned below, was prepared.

"A" liquid: 171.6 parts polyacryl polyol of Example 1 and 57.2 parts titanium oxide were kneaded in a three-roller kneading machine to form a paste.

"B" liquid: 7.8 parts xylole were added to 14.2 parts LTI-E to form a triisocyanate solution with an NCO content of 30 wt.%.

By mixing equal amounts of "A" and "B" liquids, a mixture of NCO/OH=1 was obtained. By adding a thinner (toluole/2-ethoxyethyl acetate=65/35 wt.%) to this mixture, the fluidity was adjusted to 15 sec. of the Ford cup No. 4. The content of non-volatile matter in the solution was 55%. This diluted solution was applied by spraying it on a mild steel sheet previously coated with a primer surfacer and polished, such as was used in Example 1, in such a manner that the film thickness after drying was approximately 40 $\mu$, and the material was heated at 60°C for 30 minutes. The coating obtained had a good luster and was also superior in respect of acid and solvent resistance. The gloss retention after exposure outdoors for 18 months was approximately 70%, thus proving to have very good weather resistance.

Concentration of the carbamide group: $15.7 \times 10^{-4}$ moles/g.

Bridging parameter: 501.

Percentage of hydrocarbon in the solvents: 57.1%.

Example 8

Methyl ethyl ketoxime in an amount equivalent to that of the NCO group was added to 14.2 parts LTI-E of the "B" liquid of Example 7, and the mixture was stirred for 5 hours at room temperature to block the NCO groups of LTI-E. By adding 7.8 parts xylol to this blocked isocyanate, a triisocyanate solution with an NCO content of 30 wt.% at the time of dissociation was prepared.

By mixing this solution with the "A" liquid of Example 7, a one-liquid type polyurethane coating was prepared.

The coating material was diluted with a thinner, and was applied to the base material in the same manner as in Example 7. After the coating had set, the material was heated at 150°C for 30 minutes to form a finished coating. The polyurethane resin coating obtained had a superior luster and showed satisfactory resistance to weather.

**Claims**

1. A polyurethane resin characterized in that it is a reaction product obtained by reacting

(A) a saturated polyol with

(B) a trifunctional isocyanate of the following general formula I

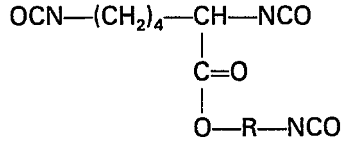

(wherein R is a divalent hydrocarbon group with 2 or 3 carbon atoms) at an NCO/OH mole ratio of 0.5 to 2.0; and in which the concentration of the carbamid group is $5\times10^{-4}$ to $50\times10^{-4}$ moles per gram of said reaction product and the bridging parameter is 150 to 1,500.

2. A polyurethane resin as claimed in Claim 1, characterized in that the molecular weight of the saturated polyol is in the range of 500 to 5,000.

3. A film coating characterized in that it comprises as main component a polyurethane resin according to claim 1 or 2.

4. A film coating as claimed in Claim 3, characterized in that the saturated polyol is a polyester polyol whose molecular weight is in the range of 500 to 1,000.

5. A film coating as claimed in Claim 3, characterized in that the saturated polyol used is a polyacryl polyol whose molecular weight is in the range of 1,000 to 3,000.

6. A film coating as claimed in any of claims 3 to 5, characterized in that the NCO/OH mole ratio is in the range of 0.5 to 1.2.

7. A film coating as claimed in Claim 5, characterized in that the polyacryl polyol is a copolymer consisting mainly of hydroxyalkyl acrylate and/or hydroxyalkyl methacrylate, and alkyl ester of acrylic acid and/or alkyl ester of methacrylic acid.

8. A two-component type polyurethane resin coating characterized in that it comprises

(A) a mixture of a saturated polyol and optionally a pigment and
(B) a trifunctional isocyanate having the general formula I of claim 1 (wherein R is a divalent hydrocarbon group with 2 or 3 carbon atoms), which optionally comprises a solvent amounting to from 1 to 50% by weight based on the component (B), and which is free of a monohydric alcohol having a radically polymerizable group.

9. A coating as claimed in Claim 8, characterized in that 50% by wt. of the solvent used and the thinner optionally added is a hydrocarbon solvent.

10. A one-component type polyurethane resin coating characterized in that it comprises a saturated polyol and a trifunctional isocyanate having the general formula I of Claim 1 (wherein R is divalent hydrocarbon group with 2 or 3 carbon atoms), in which the isocyanate group is blocked with a blocking agent, and which is free of a monohydric alcohol having a radically polymerizable group.

11. A coating as claimed in Claim 10, characterized in that more than 50% by wt. of the solvent which is optionally added is a hydrocarbon solvent.

**Patentansprüche**

1. Polyurethan-Harz, dadurch gekennzeichnet, daß es ein Reaktionsproduckt ist, das erhalten wurde durch Umsetzung

(A) eines gesättigten Polyols mit
(B) einem trifunktionellen Isocyanat der folgenden allgemeinen Formel I

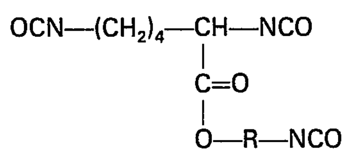

(in der R eine divalente Kohlenwasserstoffgruppe mit 2 oder 3 Kohlenstoffatomen ist) bei einem NCO/OH-Molverhältnis von 0,5 bis 2,0; und bei dem die Konzentration der Carbamid-Gruppe $5\times10^{-4}$ bis $50\times10^{-4}$ Mole pro g des genannten Reaktionsprodukts beträgt und der Verbrückungsparameter 150 bis 1500 beträgt.

2. Polyurethan-Harz nach Anspruch 1, dadurch gekennzeichnet, daß das Molekulargewicht des gesättigten Polyols im Bereich von 500 bis 5000 liegt.

3. Filmanstrich, dadurch gekennzeichnet, daß er als Hauptbestandteil ein Polyurethan-Harz nach Anspruch 1 oder 2 enthält.

4. Filmanstrich nach Anspruch 3, dadurch gekennzeichnet, daß das gesättigte Polyol ein Polyesterpolyol ist, dessen Molekulargewicht im Bereich von 500 bis 1000 liegt.

5. Filmanstrich nach Anspruch 3, dadurch gekennzeichnet, daß das verwendete gesättigte Polyol ein Polyacrylpolyol ist, dessen Molekulargewicht im Bereich von 1000 bis 3000 liegt.

6. Filmanstrich nach einem der Ansprüche 3 bis 5, dadurch gekennzeichnet, daß das NCO/OH-Molverhältnis im Bereich von 0,5 bis 1,2 liegt.

7. Filmanstrich nach Anspruch 5, dadurch gekennzeichnet, daß das Polyacrylpolyol ein Copolymeres ist, das in der Hauptsache aus Hydroxyalkylacrylat und/oder Hydroxyalkylmethacrylat sowie einem Alkylester der Acrylsäure und/oder einem Alkylester der Methacrylsäure besteht.

8. Polyurethan-Harz-Anstrich vom Zwei-Komponenten-Typ, dadurch gekennzeichnet, daß er umfaßt:

(A) eine Mischung aus einem gesättigten Polyol sowie gegebenenfalls einem Pigment und
(B) ein trifunktionelles Isocyanat mit der allgemeinen Formel I von Anspruch 1 (in der R eine divalente Kohlenwasserstoffgruppe mit 2 oder 3 Kohlenstoffatomen ist), und der gegebenenfalls in einer Menge von 1 bis 50 Gew.-% bezogen auf die Komponente (B) ein Lösungsmittel enthält und der frei von einem einwertigen Alkohol mit einer radikalisch polymerisierbaren Gruppe ist.

9. Anstrich nach Anspruch 8, dadurch gekennzeichnet, daß 50 Gew.-% des verwendeten Lösungsmittels und das gebenenfalls zugesetzte Verdünnungsmittel ein Kohlenwasserstoff-Lösungsmittel ist.

10. Ein Polyurethan-Harz-Anstrich vom Ein-Komponenten-Typ, dadurch gekennzeichnet, daß er ein gesättigtes Polyol und ein trifunktionelles Isocyanat der allgemeinen Formel I von Anspruch 1 (in der R eine divalente Kohlenwasserstoffgruppe mit 2 oder 3 Kohlenstoffatomen ist) umfaßt, in dem die Isocyanat-Gruppe mit einem Verkappungsmittel verkappt ist und der frei ist von einem einwertigen Alkohol mit einer radikalisch polymerisierbaren Gruppe.

11. Filmanstrich nach Anspruch 10, dadurch gekennzeichnet, daß mehr als 50 Gew.-% des gegebenenfalls zugesetzten Lösungsmittels ein Kohlenwasserstoff-Lösungsmittel sind.

**Revendications**

1. Résine de polyuréthane, caractérisée en ce que c'est un produit réactionnel obtenu en faisant réagir

(A) un polyol saturé avec
(B) un isocyanate trifonctionnel de formule générale suivante I

$$OCN—(CH_2)_4—CH—NCO$$
$$|$$
$$C{=}O$$
$$|$$
$$O—R—NCO$$

(où R est un groupe hydrocarboné divalent ayant 2 ou 3 atomes de carbone) avec un rapport molaire NCO/OH de 0,5 à 2,0; et en ce que la concentration du groupe carbamide est $5\times10^{-4}$ à $50\times10^{-4}$ mole par gramme de produit réactionnel et le paramètre de pontage est 150 à 1500.

2. Résine de polyuréthane selon la revendication 1, caractérisée en ce que le poids moléculaire du polyol saturé est dans la gamme de 500 à 5000.

3. Film de revêtement, caractérisé en ce qu'il comprend comme composant principal une résine de polyuréthane selon la revendication 1 ou la revendication 2.

4. Film de revêtement selon la revendication 3, caractérisé en ce que le polyol saturé est un polyesterpolyol dont le poids moléculaire est dans la gamme de 500 à 1000.

5. Film de revêtement selon la revendication 3, caractérisé en ce que le polyol saturé utilisé est un polyacrylpolyol dont le poids moléculaire est dans la gamme de 1000 à 3000.

6. Film de revêtement selon l'une quelconque des revendications 3 à 5, caractérisé en ce que le rapport molaire NCO/OH est dans la gamme de 0,5 à 1,2.

7. Film de revêtement selon la revendication 5, caractérisé en ce que le polyacrylpolyol est un copolymère se composant principalement d'acrylate d'hydroxyalkyle et/ou de méthacrylate d'hydroxyalkyle et d'ester alkylique d'acide acrylique et/ou d'ester alkylique d'acide méthacrylique.

8. Revêtement de résine de polyuréthane du type à deux composants, caractérisé en ce qu'il comprend:

(A) un mélange d'un polyol saturé et de manière facultative d'un pigment, et

(B) un isocyanate trifonctionnel ayant la formule générale I de la revendication 1, (où R est un groupe hydrocarboné divalent ayant 2 ou 3 atomes de carbone), qui comprend de manière facultative un solvant en quantité s'élevant à 1 à 50% en poids en se bassant sur le composant (B), et qui est exempt d'un alcool monohydroxylé (monoalcool) ayant un groupe polymérisable par voie radicalaire.

9. Revêtement selon la revendication 8, caractérisé en ce que 50% en poids du solvant utilisé et du diluant ajouté de manière facultative sont formés par un solvant hydrocarboné.

10. Revêtement de résine de polyuréthane du type à un composant, caractérisé en ce qu'il comprend un polyol saturé et un isocyanate trifonctionnel ayant la formule générale I de la revendication 1 (où R est un groupe hydrocarboné divalent ayant 2 ou 3 atomes de carbone), où le groupe isocyanate est bloqué avec un agent de blocage, et qui est exempt d'un alcool monohydroxylé (monoalcool) ayant un groupe polymérisable par voie radicalaire.

11. Revêtement selon la revendication 10, caractérisé en ce que plus de 50% en poids du solvant ajouté de manière facultative sont formés par un solvant hydrocarboné.